# FASCICULE DE BREVET EUROPEEN

(11) **EP 1 776 828 B1**
(45) Date de publication et mention de la délivrance du brevet: **10.02.2010**
(21) Numéro de dépôt: 05726498.8
(22) Date de dépôt: 31.03.2005
(51) Int. Cl.: H04M 1/02

(54) **PLACEMENT OPTIMISÉ DES CIRCUITS PILOTES D'UN ÉCRAN D'UN TÉLÉPHONE MOBILE**
OPTIMIERTES PLATZIEREN VON BILDSCHIRMTREIBERSCHALTUNGEN EINES MOBILTELEFONS
OPTIMISED PLACING OF SCREEN DRIVER CIRCUITS OF A MOBILE TELEPHONE

(30) Priorité: 02.07.2004 FR 0451429
(43) Date de publication de la demande: 25.04.2007
(73) Titulaire: SAGEM MOBILES, 75512 Paris (FR)
(72) Inventeur: ROMAO, Fernando, 78100 Saint Germain en Laye (FR)
(74) Mandataire: Camus, Olivier Jean-Claude
(86) Numéro de dépôt international: PCT/FR2005/050206
(87) Numéro de publication internationale: WO 2006/013293

(56) Documents cités:
- EP-A- 0 927 949
- EP-A- 0 951 161
- FR-A- 2 835 380
- GB-A- 2 336 019
- US-A1- 2004 077 391

## Description

La présente invention concerne un téléphone mobile muni d'un écran et d'un clavier. Un des buts de l'invention est de réaliser un téléphone comportant un écran et ou un clavier de grande taille en modifiant le moins possible les dimensions de ses composants par rapport à une de ses versions antérieures. La présente invention trouve une application particulièrement avantageuse, mais non exclusive, dans le domaine des téléphones mobiles utilisés dans les réseaux de télécommunications de type GSM ou UMTS.

Dans l'état de la technique, on connaît des téléphones monoblocs qui comportent un écran de grande taille afin d'améliorer le confort visuel d'un utilisateur. Par téléphone monobloc, on entend un téléphone dont le boîtier comporte une seule boîte avec des demi-coques présentant une continuité, notamment cristallographique, en particulier sans articulation comme divulgué par exemple dans le document US 2004/0077391. Pour agrandir l'écran de ces téléphones, il a été nécessaire de réduire leur clavier en correspondance et ou de modifier leur ergonomie. Un tel choix ne plaît pas à tous les consommateurs. En effet, certains consommateurs n'acceptent pas de sacrifier la taille du clavier de leur téléphone pour un meilleur confort visuel.

Certains constructeurs, pour contourner le problème de l'optimisation de la taille de l'écran ont produit des téléphones en deux parties réunies par une charnière. Ces téléphones comportent alors un boîtier en deux parties, deux boîtes, capables d'entrer en rotation l'une par rapport à l'autre. Une des deux parties est dédiée à l'écran du téléphone tandis que l'autre est dédiée au clavier. De cette manière, le volume du téléphone, en position transport, n'est pas une contrainte pour l'utilisation d'un écran et d'un clavier étendus. Toutefois, même s'il est pliable, un tel téléphone est plus encombrant qu'un téléphone de type monobloc.

D'autres téléphones comportent aussi un boîtier en deux parties, une première partie pouvant se déplacer en translation par rapport à une deuxième partie. La première partie peut par exemple comporter des haut-parleurs tandis que la deuxième partie peut être solidaire du clavier et de l'écran. Dans une position ouverte, la première partie laisse apparaître un écran de grande taille, alors que dans une position rétractée, la première partie laisse apparaître un écran plus petit. Toutefois, là encore, même en position rétractée, un téléphone de ce type est plus volumineux qu'un téléphone monobloc.

En outre, que ce soit pour le téléphone avec rotation ou le téléphone avec translation, des connexions reliant les deux parties du téléphone peuvent être altérées dans le temps en raison de mouvements intempestifs.

Un autre problème à résoudre est celui de l'industrialisation. On veut dans certains cas agrandir la taille de l'écran de 20 à 30 %. Dans le cadre de ces agrandissements, on ne veut toutefois pas avoir à concevoir en entier une nouvelle architecture de la structure interne du téléphone mobile. On veut en effet réutiliser des fonctions déjà réalisées dans un téléphone ancien. En effet, une telle réalisation ancienne a été éprouvée par une utilisation antérieure : tenue mécanique, thermique, vieillissement, compatibilité électromagnétique, respect des contraintes de diffusion électromagnétiques, réutilisation des solutions acoustiques déjà maîtrisées, maintien de tous les composants dans un boîtier de même taille et ainsi de suite. En résumé, on cherche à tout garder comme avant, sauf la taille de l'écran. Eventuellement, le nombre de pixels sur l'écran peut changer mais dans ce cas, une adaptation logicielle simple est envisageable.

Pour résoudre ces problèmes, la présente invention se propose de munir un téléphone monobloc d'un écran de grande taille sans diminuer les dimensions de son clavier, sans modifier son ergonomie, et de préférence sans changer des circuits principaux.

A cet effet, dans l'invention, on modifie l'agencement de certains composants à l'intérieur du téléphone, de manière à agrandir l'écran sans réduire le clavier.

Plus précisément, le téléphone selon l'invention comporte alors un clavier qui est situé au dessus de circuits pilotes de l'écran, de manière à ce que l'écran et le clavier se chevauchent. Ainsi, il est possible, notamment dans un boîtier ancien, d'augmenter la taille de l'écran et ou du clavier de la distance sur laquelle l'écran et le clavier se chevauchent.

En outre, une bride antistatique associée à l'écran s'étend, à titre de perfectionnement, sur toute une longueur du téléphone, de manière à supporter le clavier.

L'invention concerne donc un téléphone mobile muni d'un écran et d'un clavier,
- l'écran étant formé par une dalle à cristaux liquides, cette dalle comportant une pellicule écran, un réseau d'électrodes contre cette pellicule écran, une couche de base, une couche d'un cristal liquide disposée entre cette pellicule écran et cette couche de base, et des circuits pilotes de l'écran disposés contre la pellicule écran, en extrémité des électrodes, et connectés aux électrodes,
- le clavier comportant un support plan de clavier, et un ensemble de boutons mobiles, les boutons étant déplaçables par action perpendiculaire au plan du support, les boutons étant maintenus élastiquement par le support et contenus à l'intérieur d'un contour de ce support, un bouton mobile ayant plusieurs parties dont une emprise, une emprise d'un bouton étant délimitée par des parties de ce bouton qui sont mobiles par rapport au support,
   caractérisé en ce que
- une partie de l'emprise d'un bouton du clavier est située, dans un endroit d'une superposition, au dessus de certains des circuits pilotes.

Par ailleurs, pour résoudre un problème d'épaisseur, l'invention a également pour objet un téléphone mobile comportant un clavier, un circuit électronique principal et un écran,
- le clavier comportant un support plan de clavier, et un ensemble de boutons mobiles, les boutons étant déplaçables par action perpendiculaire au plan du support, les boutons étant maintenus élastiquement par le support et contenus à l'intérieur d'un contour de ce support, un bouton mobile ayant plusieurs parties dont une emprise, une emprise d'un bouton étant délimitée par des parties de ce bouton qui sont mobiles par rapport au support,
- le circuit électronique principal portant sur une première face un premier groupe de composants et sur une deuxième face un deuxième groupe de composants, le premier groupe débouchant du côté opposé au clavier, le deuxième groupe débouchant du côté du clavier,
- l'écran étant formé par une dalle à cristaux liquides, cette dalle comportant une pellicule écran, un réseau d'électrodes contre cette pellicule écran, une couche de base, une couche d'un cristal liquide disposée entre cette pellicule écran et cette couche de base, et des circuits pilotes de l'écran disposés contre la pellicule écran, en extrémité des électrodes, et connectés aux électrodes,
- ces circuits pilotes étant reliés à un circuit auxiliaire par l'intermédiaire d'une première nappe de connexions, ce circuit auxiliaire étant relié à un connecteur du circuit principal par l'intermédiaire d'une deuxième nappe de connexions et,
- caractérisé en ce que
- le circuit auxiliaire, la première nappe et la deuxième nappe de connexions sont placés entre le deuxième groupe de composants et le support de clavier.

L'invention sera mieux comprise à la lecture de la description qui suit et à l'examen des figures qui l'accompagnent. Elles ne sont présentées qu'à titre indicatif et nullement limitatif de l'invention. Les figures montrent :
- figures 1 a et 1 b : respectivement, des vues de côté d'un téléphone portable monobloc suivant l'état de la technique et suivant l'invention;
- figure 2 : une vue de côté d'un clavier selon l'invention;
- figure 3a et 3b : respectivement des vues de dessus d'un téléphone suivant l'état de la technique et suivant l'invention.

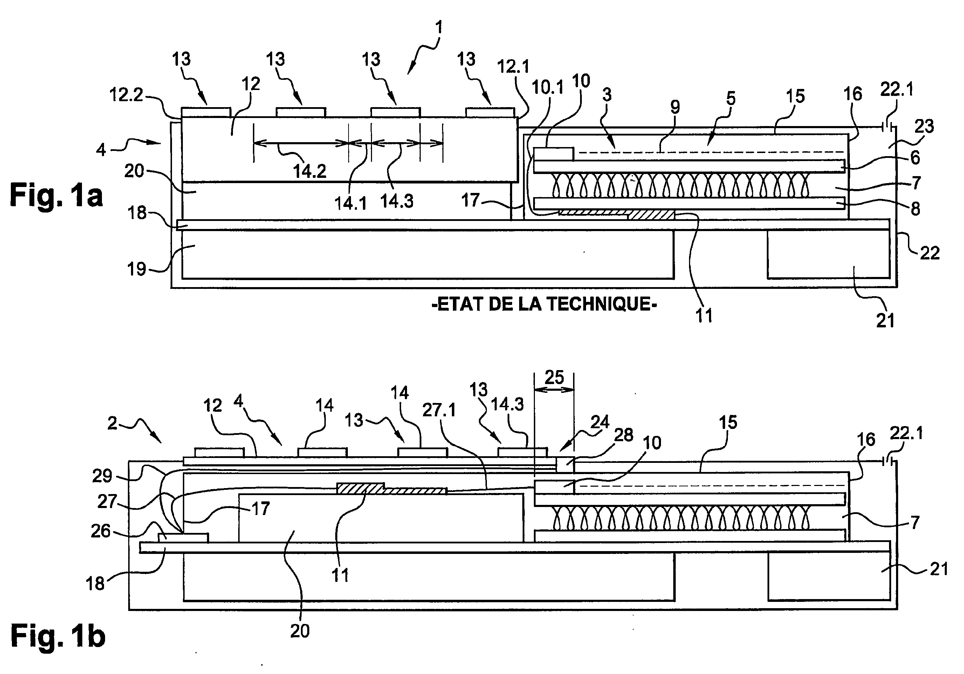

Les figures 1a et 1b montrent des vues de côté d'un téléphone 1 mobile de l'état de la technique et d'un téléphone 2 mobile selon l'invention.

Le téléphone 1 est muni d'un écran 3 et d'un clavier 4. L'écran 3 est formé par une dalle 5 à cristaux liquides. Cette dalle 5 comporte une pellicule 6 écran et une couche 7 de cristaux liquides disposée entre la pellicule 6 écran et une couche 8 de base. La couche 8 de base comporte notamment un guide de lumière et une surface diffusante.

La dalle 5 comporte en outre un réseau 9 d'électrodes disposé contre la pellicule 6. Les électrodes du réseau 9 sont transparentes et créent des différences de potentiel aux bornes des cristaux de la couche 7, entre elles et une masse électrique portée par la couche de base 7, afin de les orienter. En effet, dans une réalisation, des diodes électroluminescentes (non représentées) génèrent une lumière diffusée par la couche 8 de base. En fonction des potentiels imposés aux électrodes du réseau 9 par rapport à un potentiel de référence fixé par la couche 8 de base, les cristaux de la couche 7 s'orientent, laissant passer ou non, certaines ou toutes les longueurs d'onde de la lumière.

Par ailleurs, l'écran 3 comporte des circuits 10 pilotes qui sont disposés contre la pellicule 6 écran, en extrémité des électrodes, et qui sont connectés aux électrodes. Ces circuits 10 comportent généralement des transistors fonctionnant dans un régime de commutation afin d'imposer, à la demande, des potentiels particuliers aux électrodes du réseau 9. Ces circuits 10 pilotes sont reliés, par une nappe flexible 10.1 à un circuit 11 auxiliaire qui leurs est associé et qui peut ne comporter que des composants passifs, tels que des résistances et des condensateurs.

L'écran 3 comporte aussi une bride 15 métallique périphérique. La bride 15 est montrée ici en coupe sur un bord de l'écran 3. La bride 15 assure une évacuation de courants de fuite induits par un champ magnétique créé par les électrodes du réseau 9. Cette bride 15 s'étend parallèlement à l'écran 3 et comporte des pieds droits 16 et 17 disposés de part et d'autre d'extrémités haute et basse de cet écran 3. Les extrémités haute et basse sont celles qui sont disposées respectivement loin et à proximité du clavier 4. Les pieds droits 16 et 17 sont des structures qui assurent le maintien de la bride 15 et de l'écran 3 par appui sur une plaquette portant un circuit électronique 18 principal.

Dans la pratique, la pellicule 6 écran est réalisée en verre mais elle pourrait aussi être réalisée dans un autre matériau transparent.

Le clavier 4 comporte un support 12 globalement plan de clavier, et un ensemble de boutons 13 mobiles réalisés sur ce support 12. Par support plan, on entend un support qui, même s'il comporte des irrégularités sur sa surface, possède une forme générale plane, un plan pouvant passer globalement par les milieux de toutes ses irrégularités.

Les boutons 13 sont en outre disposés en surépaisseur perpendiculairement au plan du support et peuvent être activés par une action perpendiculaire au plan du support. Les boutons 13 sont maintenus élastiquement par le support 12 et sont contenus à l'intérieur d'un contour 12.1, 12.2 de ce support 12. Le contour 12.1, 12.2, sur la coupe représentée, comporte un segment 12.1 proche de l'écran et un segment 12.2 éloigné de l'écran. Des bords de ce contour non représentés lient entre elles des extrémités de ces segments.

Un bouton 13 mobile possède plusieurs parties. Notamment un bouton 13 correspond à une réservation d'espace 14.1 contiguë dans le plan du support 13 avec une réservation d'espace 14.2 d'un bouton adjacent. Dans cette réservation 14.1, un bouton 13 comporte une emprise 14.3. Cette emprise 14.3 est la partie de ce bouton 13 délimitée par des parties de ce bouton 13 qui sont mobiles par rapport au support 12.

Le téléphone 1 de l'état de la technique comporte en outre le circuit 18 électronique principal assurant la gestion globale des signaux émis à destination des différents circuits du téléphone. Ce circuit 18 électronique principal porte sur une face un premier groupe 19 de composants électroniques comportant notamment une batterie (non représentée) du téléphone 1 et, sur une deuxième face, un deuxième groupe 20 de composants électroniques. Les composants du deuxième groupe 20 sont disposés entre les composants du premier groupe 19 et le support 12 du clavier.

Un boîtier 22 englobe l'ensemble des composants du téléphone 1. Un espace 23 existe entre une extrémité haute du boîtier 22, celle la plus éloignée du clavier, et le pied droit 16 de la bride 15. Toutefois, cet espace 23 ne peut pas être mis à profit pour augmenter la taille de l'écran 3. En effet, l'utilisation d'un haut parleur 21, connecté sur le circuit électronique 18 du côté du premier groupe 19 de composants, impose la création de cet espace 23 pour que les signaux sonores émis soient compréhensibles par un utilisateur. A cet égard, le boîtier 22 est muni en regard de l'espace 23 d'une ouverture 22.1 pour la diffusion du son.

En variante, le circuit 18 ne porte pas de deuxième groupe 20 de composants et le clavier 4 est posé directement sur le circuit 18 électronique principal.

Le téléphone 2 selon l'invention comporte les mêmes éléments que le téléphone de l'état de la technique, sauf que certains ne sont pas agencés de la même manière.

En effet, dans le téléphone 2 selon l'invention, une partie de l'emprise 14.3 d'un bouton 13 du clavier est située, dans un endroit 24 d'une superposition, au dessus de certains des circuits pilotes 10 d'écran. L'écran 3 peut ainsi être allongé d'une longueur 25 correspondant dans un exemple à une longueur des circuits 10 pilotes d'écran, sans que l'on ait à modifier les dimensions du clavier 4. En effet, le clavier 4 pourra se superposer avec l'écran 3 sur une distance correspondant à la longueur dont aura été agrandi cet écran 3. De cette façon, en conservant une taille de clavier d'un modèle ancien, on peut agrandir l'écran 3 en le faisant passer en partie sous le clavier 4. En variante, le téléphone 2 selon l'invention comporte un clavier 4 plus long que celui du téléphone 1 tandis que la longueur de l'écran 3 demeure inchangée par rapport à celui du téléphone 1.

A titre de perfectionnement, la bride 15 du téléphone 2 selon l'invention se prolonge sous le clavier 4 à l'endroit 24 de la superposition et supporte ce clavier 4. De ce fait, la bride 15 est rigidifiée afin d'éviter une déformation de la couche à cristaux liquides lorsqu'un utilisateur appuie sur un bouton 13 à l'endroit 24 de la superposition. Dans ce but, la bride 15, qui autour de l'écran a la forme d'un cadre, est modifiée pour comporter dans l'endroit 24 une partie pleine interposée entre les circuits 10 et les boutons 13. Avec une bride ainsi rigidifiée en travers, les efforts appliqués lors d'un appui sur un bouton 13 sont répartis sur toute une surface de la bride 15 de manière à ce que la bride 15 ne se plie pas. Dans un exemple de réalisation, on utilise une bride 15 possédant au moins à l'endroit de l'espace 24, une surépaisseur d'environ 0.3mm, toutefois on pourrait utiliser une autre bride dont l'épaisseur serait comprise entre 0.25 et 0.40mm.

Dans une réalisation particulière, la bride 15 s'étend sous tout le clavier 4. Dans cette réalisation, le pied droit 16 se situe en périphérie de l'écran et le pied droit 17 se situe en périphérie de circuits électroniques sous-jacents au clavier, tels que les composants du deuxième groupe 20.

Dans le téléphone 2 selon l'invention, on peut profiter du nouvel agencement pour déplacer le circuit 11 auxiliaire et le placer au dessus du deuxième groupe 20 de composants, entre ce deuxième groupe 20 et le support 12 de clavier, de préférence sous la bride 15. Ce déplacement du circuit 11 auxiliaire permet de réduire l'épaisseur du téléphone 2 de l'épaisseur de ce circuit 11. A cette fin, la bride 15 qui impose l'épaisseur du téléphone possède alors une longueur de pieds-droits correspondant simplement à la hauteur de la dalle 5 et des circuits 10 pilotes. En outre, le déplacement du circuit 11 auxiliaire permet d'exploiter utilement l'espace occupé auparavant par la connexion 10.1 en demi-cercle reliant le circuit 11 aux circuits 10 pilotes.

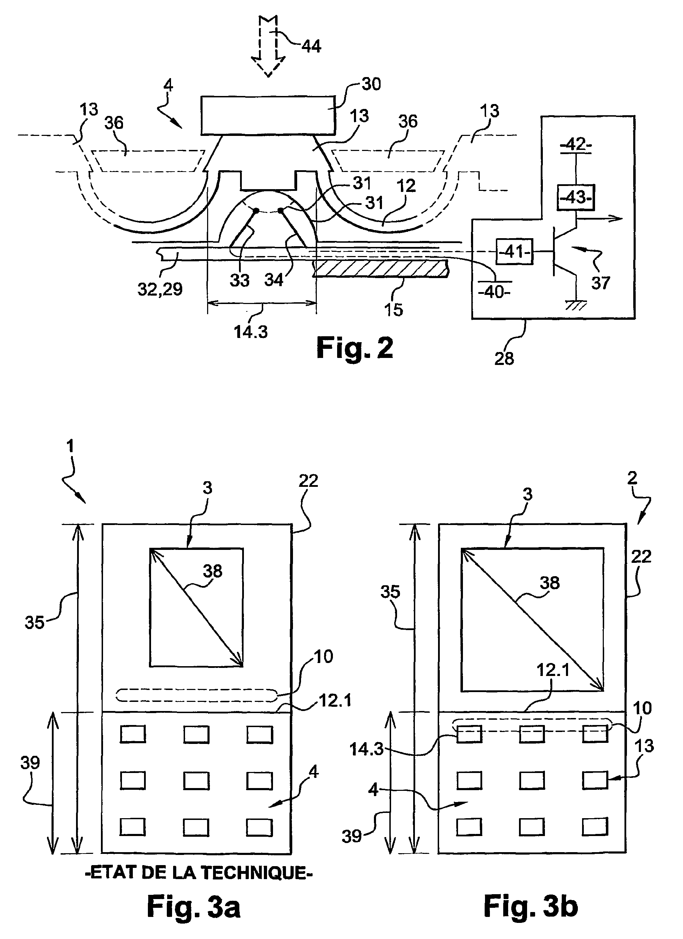

Par ailleurs, dans le téléphone 2, une première nappe 27.1 de connexions permet de relier le circuit 11 auxiliaire aux circuits 10 pilotes. En prolongement de la première nappe 27.1, de l'autre côté du circuit 11, une deuxième nappe 27 assure une connexion entre un premier connecteur 26 de circuit accroché au circuit 18 électronique principal et le circuit 11 auxiliaire. Les première et deuxième nappes 27 et 27.1 passent entre le deuxième groupe 20 et le support 12 de clavier, de préférence sous la bride 15. En variante, la nappe souple 27-27.1 porte le circuit 11. Un deuxième connecteur de circuit, situé à côté du connecteur 26, assure une connexion entre le circuit 18 électronique principal et des circuits pilotes 28 de clavier par l'intermédiaire d'une troisième nappe 29 de connexions. Les circuits 28 pilotes de clavier se situent à une extrémité du clavier, par exemple juste à la périphérie de l'écran. En variante, les circuits 28 se situent du côté opposé du clavier, à proximité du pied droit 17. Le deuxième connecteur n'est pas visible sur la figure 2 car il se situe dans le même plan que le premier connecteur 26. La troisième nappe 29 comporte pour l'essentiel des contacts qui peuvent être reliés entre eux par actions sur les boutons 13.

Dans une réalisation particulière, la deuxième nappe 27 de connexions passe par une fenêtre réalisée dans le pied droit 17 de la bride 15 et passe entre cette bride 15 et le deuxième groupe 20 de composants. La troisième nappe 29 de connexions passe au dessus de la bride 15 et est prise en sandwich entre cette bride 15 et le support 12 du clavier. Ces passages des nappes 27 et 29 de connexions permettent de les maintenir immobiles et d'éviter qu'elles se déconnectent lorsqu'un utilisateur se déplace avec son téléphone. En effet, l'utilisateur fait subir malgré lui des mouvements intempestifs à son téléphone qui peuvent engendrer une déconnexion précoce des nappes 27 et 29 si elles ne sont pas maintenues.

La figure 2 montre notamment une vue de côté du clavier 4 du téléphone 2 selon l'invention. Ce clavier 4 comporte un support 12 de clavier, par exemple en élastomère, et des boutons 13 disposés de préférence régulièrement sur ce support 12 en continuité de matériau avec le matériau du support 22. Une touche 30 prend appui sur un bouton 13 qui lui même prend appui sur une coupelle 31 métallique flexible. Cette coupelle 31 est disposée sur un circuit 32 électronique, de manière à ce qu'elle se situe au dessus de lamelles 33, 34 de ce circuit électronique. Ces lamelles de contact 33, 34 ne sont pas en contact dans une position de repos, c'est à dire lorsqu'aucune pression n'est exercée sur la touche 30. La bride 15 est plaquée sous le circuit 32, du côté opposé à celui contre lequel est plaquée la coupelle 31.

Dans un exemple, pour détecter un appui sur la touche 30, on observe des variations de potentiel du collecteur d'un transistor 37 de type NPN intégré dans les circuits pilotes 28 du clavier 4. Tous les potentiels dont il sera question sont mesurés par rapport à une masse. Dans cette réalisation, une des lamelles 33 est reliée à un point 40 des circuits 28 comportant un potentiel positif suffisant pour faire commuter le transistor 37, tandis que l'autre lamelle 34 est reliée à une base du transistor 37 par l'intermédiaire d'une première résistance 41. L'émetteur de ce transistor 37 est relié à la masse, tandis que le collecteur de ce transistor est relié à un point 42 de potentiel positif par l'intermédiaire d'une deuxième résistance 43.

Ainsi, lorsque les lamelles 33, 34 se trouvent dans la position de repos, aucun courant ne traverse le transistor de la base vers son émetteur. Un potentiel de niveau élevé est alors observable sur le collecteur de ce transistor. En revanche, lorsqu'un utilisateur exerce des forces 44 de pression perpendiculaire au support 12 sur la touche 30, le bouton 13 s'enfonce sur une partie de son emprise 14.3. L'enfoncement du bouton 13 fait plier la coupelle 31 qui établit un contact entre les deux lamelles 33 et 34. Un courant traverse alors le transistor 37 de la base vers l'émetteur et a pour effet de faire commuter le transistor 37. Un potentiel faible est alors observable sur le collecteur. En variante, une détection de l'appui d'un bouton 13 est réalisée par détection d'une variation de champ magnétique.

Dans une réalisation particulière, les lamelles 33, 34 sont intégrées à l'intérieur de la troisième nappe 29. Cette troisième nappe 29 comporte ainsi une face comportant des lamelles 33, 34 aptes à coopérer électriquement avec des coupelles 31 et une face comportant les connexions 31-33 qui assurent la liaison entre le circuit 28 et le premier connecteur 26.

Dans la pratique, le clavier 4 est réalisé dans un matériau flexible, tel que de l'élastomère.

Les touches 30 facilitent un appui précis sur les boutons 13 et protègent le téléphone 2 contre des poussières éventuelles. Toutefois en variante, il est possible de réaliser un téléphone 2 qui ne comporte pas de touches 30.

En variante, le téléphone 2 comporte une couche 36 protectrice indéchirable qui s'étend entre chaque bouton 13 et qui possède des cavités autorisant les boutons 13 à la traverser. Dans la pratique, cette couche 36 est réalisée dans un matériau plastique rigide.

Les figures 3a et 3b montrent respectivement une représentation d'une vue de dessus du téléphone 1 suivant l'état de la technique et du téléphone 2 réalisé l'invention. Ces figures mettent en évidence que pour une même taille de boîtier 22 et de clavier 4, l'écran du téléphone 2 selon l'invention est plus grand que l'écran du téléphone 1 selon l'état de la technique.

En effet, le téléphone 1 de la figure 3a possède un boîtier 22 d'une longueur 35 standard de 106,5mm, un clavier 4 ergonomique d'une longueur 39 de 40mm et un écran 3 dont la longueur de la diagonale 38 vaut 1,8 pouces. Alors que, pour les mêmes dimensions de boîtier 22 et de clavier 4, le téléphone 2 de la figure 3b comporte un écran dont la longueur de la diagonale 38 vaut 2 ou 2,2 pouces.

Le contour 12.1 du clavier 4 qui contient les boutons 13 est ici de forme rectangulaire mais en variante, il pourrait prendre une autre forme. Par ailleurs, le contour 12.1 se confond ici en partie avec le contour du téléphone 2 mais en variante, il pourrait en être distinct complètement.

Pour le téléphone 1 de la figure 3a, le clavier 4 et les circuits 10 représentés en traits discontinus sont décalés l'un par rapport à l'autre. Alors que pour le téléphone 2, une partie de certains boutons 13 chevauche en partie les circuits 10 pilotes dans leur largeur. En effet, la projection de l'emprise 14.3 de certains boutons dans une direction perpendiculaire au plan de la feuille sur les circuits 10 pilotes correspond à une surface qui est confondue en partie avec la surface délimitée par un contour des circuits 10 pilotes.

## Revendications

1. Téléphone (2) mobile muni d'un écran (3) et d'un clavier (4),
- l'écran étant formé par une dalle (5) à cristaux liquides, cette dalle comportant une pellicule (6) écran, un réseau (9) d'électrodes contre cette pellicule écran, une couche (8) de base, une couche (7) d'un cristal liquide disposée entre cette pellicule (6) écran et cette couche (8) de base, et des circuits (10) pilotes de l'écran disposés contre la pellicule (6) écran, en extrémité des électrodes, et connectés aux électrodes,
- le clavier (4) comportant un support (12) plan de clavier, et un ensemble de boutons (13) mobiles, les boutons (13) étant déplaçables par action perpendiculaire au plan du support (12), les boutons (13) étant maintenus élastiquement par le support (12) et contenus à l'intérieur d'un contour de ce support (12), un bouton (13) mobile ayant plusieurs parties dont une emprise (14), une emprise (14) d'un bouton étant délimitée par des parties de ce bouton (13) qui sont mobiles par rapport au support (12),
**caractérisé en ce que**
- une partie de l'emprise (14) d'un bouton du clavier est située, dans un endroit (24) d'une superposition, au dessus de certains des circuits (10) pi lotes.

2. Téléphone (2) mobile comportant un clavier (4), un circuit (18) électronique principal et un écran (3),
- le clavier (4) comportant un support (12) plan de clavier, et un ensemble de boutons (13) mobiles, les boutons (13) étant déplaçables par action perpendiculaire au plan du support (12), les boutons (13) étant maintenus élastiquement par le support (12) et contenus à l'intérieur d'un contour de ce support (12), un bouton (13) mobile ayant plusieurs parties dont une emprise (14), une emprise (14) d'un bouton étant délimitée par des parties de ce bouton (13) qui sont mobiles par rapport au support (12),
- le circuit (18) électronique principal portant sur une première face un premier groupe (19) de composants et sur une deuxième face un deuxième groupe (20) de composants, le premier groupe (19) débouchant du côté opposé au clavier (4), le deuxième groupe débouchant du côté du clavier (4),
- l'écran (3) étant formé par une dalle (5) à cristaux liquides, cette dalle (5) comportant une pellicule (6) écran, un réseau (9) d'électrodes contre cette pellicule écran, une couche (8) de base, une couche (7) d'un cristal liquide disposée entre cette pellicule (6) écran et cette couche (8) de base, et des circuits (10) pilotes de l'écran disposés contre la pellicule (6) écran, en extrémité des électrodes, et connectés aux électrodes,
- ces circuits (10) pilotes étant reliés à un circuit (11) auxiliaire par l'intermédiaire d'une première nappe (27.1) de connexions, ce circuit (11) auxiliaire étant relié à un premier connecteur (26) du circuit principal par l'intermédiaire d'une deuxième nappe (27) de connexions et,
- **caractérisé en ce que**
- le circuit auxiliaire (11), la première nappe (27.1) et la deuxième nappe (27) de connexions sont placés entre le deuxième groupe (20) de composants et le support (12) de clavier.

3. Téléphone selon la revendication 2 **caractérisé en ce que**
- le circuit (11) auxiliaire ne comporte que des composants passifs.

4. Téléphone selon l'une des revendications 2 à 3 **caractérisé en ce que**
- le circuit (11) auxiliaire, la première nappe (27.1), et la deuxième nappe (27) sont placés entre le deuxième groupe (20) de composants et une bride (15) de maintien de l'écran (3).

5. Téléphone selon l'une des revendication 2 à 4 **caractérisé en ce que**
- une partie de l'emprise (14) d'un bouton du clavier est située, dans un endroit (24) d'une superposition, au dessus de certains des circuits (10) pi lotes.

6. Téléphone selon l'une des revendications 1 à 5, **caractérisé en ce que**
- l'écran (3) comporte une bride (15) métallique périphérique, cette bride (15) se prolongeant sous le clavier (4) à l'endroit de la superposition.

7. Téléphone selon la revendication 6, **caractérisé en ce que** la bride, à l'endroit de la superposition possède une épaisseur rigidifiante de 0,3 mm.

8. Téléphone selon l'une des revendications 4 à 7, **caractérisé en ce que** la bride (15)
- s'étend sous tout le clavier (4), et
- comporte deux pieds-droits (16-17), un situé en périphérie de l'écran (3), l'autre situé en périphérie de circuits (20) électroniques sous-jacents au clavier.

9. Téléphone selon l'une des revendications 1 à 8, **caractérisé en ce que** la couche (8) de base comporte un guide de lumière.

10. Téléphone selon l'une des revendications 1 à 9 **caractérisé en ce que**
- le circuit principal comporte un deuxième connecteur assurant une connexion entre le circuit (18) électronique principal et des circuits (28) pilotes de clavier par l'intermédiaire d'une troisième nappe (29) de connexions,
- cette troisième nappe (29) de connexions étant prise en sandwich entre la bride (15) et le support (12) du clavier.

11. Téléphone selon la revendication 10, **caractérisé en ce que**
- la troisième nappe (29) de connexions comporte des contacts (33, 34) électriques aptes à coopérer électriquement avec des coupelles (31) métalliques.

12. Téléphone selon l'une des revendications 10 à 11, **caractérisé en ce que**
- la première nappe (27.1) de connexions est souple et porte les circuits auxiliaires.

## Claims

1. A mobile telephone (2) fitted with a screen (3) and a keypad (4),
- the screen being formed by a liquid crystal face plate (5), this face plate including a shield film (6), a network (9) of electrodes against this shield film, a base layer (8), a layer (7) of a liquid crystal located between this shield film (6) and this base layer (8), and screen drive circuits (10) located against the shield film (6) at the end of the electrodes, and connected to the electrodes,
- the keypad (4) including a keymap support (12) and a set of mobile buttons (13), the buttons (13) capable of being displaced by an action perpendicular to the plane of the support (12), the buttons (13) being maintained elastically by the support (12) and contained inside a contour of this support (12), a mobile button (13) having several parts including a grip (14), a grip (14) of a button being defined by the parts of this button (13) which are mobile with respect to the support (12),
**characterised in that**
- a part of the grip (14) of a button of the keypad is located in a superposed position (24), above some of the drive circuits (10).

2. A mobile telephone including a keypad (4), a main electronic circuit (18) and a screen (3),
- the keypad (4) including a keymap support (12) and a set of mobile buttons (13), the buttons (13) capable of being displaced by an action perpendicular to the plane of the support (12), the buttons (13) being maintained elastically by the support (12) and contained inside a contour of this support (12), a mobile button (13) having several parts including a grip (14), a grip (14) of a button being defined by the parts of this button (13) which are mobile with respect to the support (12),
- the main electronic circuit (18) comprising on a first side, a first group (19) of components and on a second side, a second group (20) of components, the first group (19) unblocking from the opposite side to the keypad (4), the second group unblocking from the side of the keypad (4),
- the screen (3) being formed by a liquid crystal face plate (5), this face plate (5) including a shield film (6), a network (9) of electrodes against this shield film, a base layer (8), a layer (7) of a liquid crystal located between this shield film (6) and this base layer (8), and screen drive circuits (10) located against the shield film (6) at the end of the electrodes, and connected to the electrodes,
- these drive circuits (10) being connected to an auxiliary circuit (11) via a first connection layer (27.1), this auxiliary circuit (11) being connected to a first connector (26) of the main circuit via a second connection layer (27), and
- **characterised in that**
- the auxiliary circuit (11), the first connection layer (27.1) and the second connection layer (27) are located between the second group (20) of components and the keypad support (12).

3. A telephone according to claim 2, **characterised in that**
- the auxiliary circuit (11) only includes passive components.

4. A telephone according to one of claims 2 to 3, **characterised in that**
- the auxiliary circuit (11), the first layer (27.1) and the second layer (27) are located between the second group (20) of components and a flange (15) maintaining the screen (3).

5. A telephone according to one of claims 2 to 4, **characterised in that**
- a part of the grip (14) of a button of the keypad is located in a superposed position (24), above some of the drive circuits (10).

6. A telephone according to one of claims 1 to 5, **characterised in that**
- the screen (3) includes a peripheral, metallic flange (15), this flange (15) extending under the keypad (4) to the superposed position.

7. A telephone according to claim 6, **characterised in that** the flange has a rigidifying thickness of 0.3 mm at the superposed position.

8. A telephone according to one of claims 4 to 7, **characterised in that** the flange (15)
- extends under the entire keypad (4), and
- includes two abutments (16-17), one located at the periphery of the screen (3), the other located at the periphery of the electronic circuits (20), subjacent to the keypad.

9. A telephone according to one of claims 1 to 8, **characterised in that** the base layer (8) includes an optical waveguide.

10. A telephone according to one of claims 1 to 9, **characterised in that**
- the main circuit includes a second connector ensuring connection between the main electronic circuit (18) and the drive circuits (28) of the keypad via a third connection layer (29),
- this third connection layer (29) being sandwiched between the flange (15) and the keypad support (12).

11. A telephone according to claim 10, **characterised in that**
- the third connection layer (29) includes electrical contacts (33, 34) capable of electrically interacting with the metallic cups (31).

12. A telephone according to one of claims 10 to 11, **characterised in that**
- the first connection layer (27.1) is flexible and comprises the auxiliary circuits.

## Patentansprüche

1. Mobiltelefon (2), das mit einem Bildschirm (3) und einer Tastatur (4) ausgestattet ist,
- wobei der Bildschirm aus einer Platte (5) mit Flüssigkristallen gebildet wird, und diese Platte eine Bildschirmfolie (6), ein Netzwerk (9) an Elektroden an dieser Bildschirmfolie, eine Grundschicht (8), eine Schicht (7) aus Flüssigkristallen, die zwischen dieser Bildschirmfolie (6) und dieser Grundschicht (8) angeordnet ist, und Pilotschaltkreise (10) des Bildschirms enthält, die im Bereich der Elektrodenenden an der Bildschirmfolie (6) angeordnet, und mit den Elektroden verbunden sind,
- wobei die Tastatur (4) eine Halterung (12) der Klavierebene und eine Einheit an beweglichen Knöpfen (13) enthält, und die Knöpfe (13) durch eine Aktion senkrecht zur Halterungsebene (12) versetzt werden können, und die Knöpfe (13) elastisch durch die Halterung (12) festgehalten, und im Inneren einer Kontur dieser Halterung (12) gehalten werden, und ein beweglicher Knopf (13) mehrere Abschnitte, darunter einen Einflussbereich (14) aufweist, wobei ein Einflussbereich (14) eines Knopfes durch Abschnitte dieses Knopfes (13) abgegrenzt wird, die in Bezug auf die Halterung (12) beweglich sind,
**dadurch gekennzeichnet, dass**
- ein Abschnitt des Einflussbereichs (14) eines Knopfes der Tastatur an einer Stelle (24) mit einer Überlagerung über bestimmten Pilotschaltkreisen (10) angeordnet ist.

2. Mobiltelefon (2), das eine Tastatur (4), einen elektronischen Hauptschaltkreis (18) und einen Bildschirm (3) enthält,
- wobei die Tastatur (4) eine Halterung (12) der Tastaturebene und eine Einheit an beweglichen Knöpfen (13) enthält, und die Knöpfe (13) durch eine Aktion normal zur Halterungsebene (12) versetzt werden können, und die Knöpfe (13) elastisch durch die Halterung (12) festgehalten, und im Inneren einer Kontur dieser Halterung (12) gehalten werden, und ein beweglicher Knopf (13) mehrere Abschnitte, darunter einen Einflussbereich (14) aufweist, wobei ein Einflussbereich (14) eines Knopfes durch Abschnitte dieses Knopfes (13) abgegrenzt wird, die in Bezug auf die Halterung (12) beweglich sind,
- wobei der elektronische Hauptschaltkreis (18) auf einer ersten Seite eine erste Gruppe (19) an Bauteilen, und auf einer zweiten Seite eine zweite Gruppe (20) an Bauteilen trägt, wobei die erste Gruppe (19) auf der der Tastatur (4) abgewandten Seite, und die zweite Gruppe (20) auf der der Tastatur (4) zugewandten Seite einmündet,
- wobei der Bildschirm (3) aus einer Platte (5) mit Flüssigkristallen gebildet wird, und diese Platte (5) eine Bildschirmfolie (6), ein Netzwerk (9) an Elektroden an dieser Bildschirmfolie, eine Grundschicht (8), eine Schicht (7) aus Flüssigkristallen, die zwischen dieser Bildschirmfolie (6) und dieser Grundschicht (8) angeordnet ist, und Pilotschaltkreise (10) des Bildschirms enthält, die im Bereich der Elektrodenenden an der Bildschirmfolie (6) angeordnet, und mit den Elektroden verbunden sind,
- wobei diese Pilotschaltkreise (10) über eine erste Lage (27.1) an Verbindungen mit einem Hilfsschaltkreis (11) verbunden sind, und dieser Hilfsschaltkreis (11) über eine zweite Lage (27) an Verbindungen mit einem ersten Stecker (26) des Hauptschaltkreises verbunden ist, und
- **dadurch gekennzeichnet, dass**
- der Hilfsschaltkreis (11), die erste Lage (27.1) und die zweite Lage (27) an Verbindungen zwischen der zweiten Gruppe (20) an Bauteilen und der Tastaturhalterung (12) angeordnet sind.

3. Telefon nach Anspruch 2, **dadurch gekennzeichnet, dass**
- der Hilfsschaltkreis (11) nur passive Bauteile enthält.

4. Telefon nach einem der Ansprüche 2 bis 3, **dadurch gekennzeichnet, dass**
- der Hilfsschaltkreis (11), die erste Lage (27.1) und die zweite Lage (27) zwischen der zweiten Gruppe (20) an Bauteilen und einem Flansch (15) zum Festhalten des Bildschirms (3) angeordnet sind.

5. Telefon nach einem der Ansprüche 2 bis 4, **dadurch gekennzeichnet, dass**
- ein Teil des Einflussbereichs (14) eines Knopfes der Tastatur an einer Stelle (24) mit einer Überlagerung über bestimmten Pilotschaltkreisen (10) angeordnet ist.

6. Telefon nach einem der Ansprüche 1 bis 5, **dadurch gekennzeichnet, dass**
- der Bildschirm (3) einen peripher angeordneten metallischen Flansch (15) enthält, wobei sich dieser Flansch (15) bis unter die Tastatur (4) an der Stelle der Überlagerung fortsetzt.

7. Telefon nach Anspruch 6, **dadurch gekennzeichnet, dass** der Flansch an der Stelle der Überlagerung eine versteifende Dicke von 0.3 mm aufweist.

8. Telefon nach einem der Ansprüche 4 bis 7, **dadurch gekennzeichnet, dass** der Flansch (15)
- sich unter die gesamte Tastatur (4) erstreckt, und
- zwei gerade Füße (16-17) aufweist, von denen der eine an der Peripherie des Bildschirms (3) und der andere an der Peripherie von der Tastatur untergeordneten elektronischen Schaltkreisen (20) angeordnet ist.

9. Telefon nach einem der Ansprüche 1 bis 8, **dadurch gekennzeichnet, dass** die Grundschicht (8) eine Lichtführung enthält.

10. Telefon nach einem der Ansprüche 1 bis 9, **dadurch gekennzeichnet, dass**
- der Hauptschaltkreis einen zweiten Stecker enthält, der über eine dritte Lage (29) an Verbindungen eine Verbindung zwischen dem elektronischen Hauptschaltkreis (18) und Pilotschaltkreisen (28) der Tastatur herstellt,
- wobei diese dritte Lage (29) an Verbindungen zwischen dem Flansch (15) und der Tastaturhalterung (12) eingeklemmt ist.

11. Telefon nach Anspruch 10, **dadurch gekennzeichnet, dass**
- die dritte Lage (29) an Verbindungen elektrische Kontakte (33, 34) aufweist, die in der Lage sind, elektrisch mit den Metallkuppeln (31) zusammenzuwirken.

12. Telefon nach einem der Ansprüche 10 bis 11, **dadurch gekennzeichnet, dass**
- die erste Lage (27.1) an Verbindungen flexibel ist und die Hilfsschaltkreise trägt.
